Europäisches Patentamt

European Patent Office

Office européen des brevets

(11) Veröffentlichungsnummer: **0 510 217 A1**

# EUROPÄISCHE PATENTANMELDUNG

(21) Anmeldenummer: **91106446.7**

(22) Anmeldetag: **22.04.91**

(51) Int. Cl.⁵: **A43D 119/00**, G05B 19/42, A43D 25/18

(43) Veröffentlichungstag der Anmeldung:
**28.10.92 Patentblatt 92/44**

(84) Benannte Vertragsstaaten:
**DE FR GB**

(71) Anmelder: **SCHÖN & CIE. AG**
**Im Gehörnerwald 2**
**W-6780 Pirmasens 17(DE)**

(72) Erfinder: **Jung, Klaus**
**Im Gehörnerwald 7**
**W-6780 Pirmasens 17(DE)**
Erfinder: **Hartmann, Willi**
**Schlossgässel 2**
**W-6786 Lemberg(DE)**

(74) Vertreter: **Keil, Rainer A., Dipl.-Phys. Dr. et al**
**KEIL & SCHAAFHAUSEN Patentanwälte**
**Eysseneckstrasse 31**
**W-6000 Frankfurt am Main 1(DE)**

(54) **Verfahren zum Festlegen des Bewegungsweges eines Werkzeuges einer Werkzeugbetätigungsvorrichtung an einer Schuhzwickmaschine.**

(57) Die Erfindung bezieht sich auf ein Verfahren zum Festlegen des Bewegungsweges der wenigstens einen Auftragedüse od. dgl. Werkzeug einer Klebstoffauftragevorrichtung od. dgl. Werkzeugbetätigungsvorrichtung an einer Schuhzwickmaschine, welche wenigstens in Längs- und in Querrichtung des eine Schuheinheit mit Brandsohle aufnehmenden, in die Schuhzwickmaschine eingespannten Leistens nahe dem die Brandsohle tragenden Leistenboden von einer einen Datenspeicher und einen Rechner aufweisenden Gebereinrichtung mit Hilfe einer Programmsteuerung über einen Stellmotor steuerbar bewegbar ist, wobei mit Hilfe einer Mustersohle vorgegebener Länge und Außenkontur und eines Linienrasters die Koordinatendaten einer Anzahl ausgewählter Punkte des gewünschten Bewegungsweges des Werkzeuges bestimmt und in den Datenspeicher eingegeben werden, wobei der Rechner das Steuerprogramm für den vollständigen Bewegungsweg des Werkzeugs aus den in den Datenspeicher eingegebenen diskreten Koordinatendaten errechnet, wobei mittels eines Rechnerprogrammes aus den in den Datenspeicher anhand nur einer oder einiger weniger ausgewählter Mustersohlen vorgegebener Größe eingegebenen Koordinatendaten, der eingegebenen Bewegungsstrecke der Auftragedüse od. dgl. Werkzeug in Längsrichtung des jeweils zu der Mustersohle passenden Leistens und ggf. der zugehörigen Gesamtlänge des Leistens bzw. der Leisten die Bewegungswege der Auftragedüse od. dgl. Werkzeug für die verschiedensten Leistengrößen ermittelt wird.

Die Erfindung bezieht sich auf ein Verfahren zum Festlegen des Bewegungsweges der wenigstens einen Auftragedüse od. dgl. Werkzeug einer Klebstoffauftragevorrichtung od. dgl. Werkzeugbetätigungsvorrichtung an einer Schuhzwickmaschine, welches wenigstens in Längs- und in Querrichtung des eine Schuheinheit mit Brandsohle aufnehmenden, in die Schuhzwickmaschine eingespannten Leistens nahe dem die Brandsohle tragenden Leistenboden von einer einen Datenspeicher und einen Rechner aufweisenden Gebereinrichtung mit Hilfe einer Programmsteuerung über einen Stellmotor, vorzugsweise numerisch, steuerbar bewegbar ist, wobei mittels einer Mustersohle, z.B. einer Musterbrandsohle vorgegebener Länge und Außenkontur und eines Linienrasters die Koordinatendaten einer Anzahl ausgewählter Punkte des gewünschten Bewegungsweges des Werkzeugs bestimmt und in den Datenspeicher, vorzugsweise digital, eingegeben werden, und wobei der Rechner das Steuerprogramm für den vollständigen Bewegungsweg des Werkzeugs aus den in den Datenspeicher eingegebenen diskreten Koordinatendaten errechnet.

Ein solches Verfahren ist aus der EP-A-0 084 949 bekannt. Dabei wird die Information bezüglich des Bewegungsweges einer Klebstoffauftragedüse und/oder von Zwickrollen relativ zu einer dreidimensionalen Schuhbodenfläche dadurch erhalten, daß man eine flache Bandsohle in Kombination mit einem gesonderten Strichraster auf einem flexiblen transparenten Material verwendet. Das Strichraster hat einen Bezugspunkt, eine Mittellinie, welche den linearen Weg eines Werkzeugträgers darstellt, und eine Vielzahl von Querlinien, wobei der Abstand zwischen jedem Paar von benachbarten Querlinien eine Zeiteinheit darstellen soll. Die Querlinien in der Nähe des Bezugspunktes liegen dichter beieinander als die weiter weg liegenden. Die Hauptkomponente der Bewegung des Werkzeuges im Gegensatz zu dem des Werkzeugträgers, relativ zu dem Schuhboden an dem Bezugspunkt, d.h. an der Schuhspitze, liegt in Breitenrichtung des Schuhs und nicht in Längsrichtung. Der Fersensprung kann ebenfalls einem Rechner eingegeben werden, welcher so programmiert ist, daß er die digitalisierte Information entsprechend dem Bereich zwischen Ballen und Ferse, welcher etwa 60 bis 65 % der Gesamtlänge eines Schuhs darstellt, modifiziert. Die Information kann auch in Anpassung an die besondere Anordnung der Düsen- und Rollenträger modifiziert werden. Dieses Verfahren erfordert nicht nur für jeden Schuhtyp sondern auch für jede Schuhgröße innerhalb eines Schuhtyps die Ausmessung ausgewählter Punkte des gewünschten Bewegungsweges der Auftragedüse od. dgl. Werkzeug mit Hilfe der Rastschablone, was zeit- und kostenaufwendig ist.

Aufgabe der vorliegenden Erfindung ist es, ein Verfahren der gattungsgemäßen Art so auszugestalten, daß der Bewegungsweg der Auftragedüsen od. dgl. für verschiedene Schuhtypen und Schuhgrößen einfacher festgelegt werden kann.

Diese Aufgabe wird erfindungsgemäß im wesentlichen dadurch gelöst, daß mittels eines Rechnerprogramms aus dem in den Datenspeicher anhand nur einer oder einiger weniger ausgewählter Mustersohlen vorgegebener Größe eingegebenen Koordinaten, der eingegebenen Bewegungsstrecke der Auftragedüse od. dgl. Werkzeug in Längsrichtung des zu der Mustersohle passenden Leistens bzw. zu den Mustersohlen passenden Leisten, und ggf. der zugehörigen Gesamtlänge des Leistens bzw. der Leisten die Bewegungswege der Auftragedüse od. dgl. Werkzeug für die verschiedensten Leistengrößen ermittelt werden.

Bei dem erfindungsgemäßen Verfahren ist es somit lediglich erforderlich, die bezüglich des gewünschten Bewegungsweges ausgewählten Punkte anhand nur einer oder einiger weniger Mustersohle(n) auszumessen und in den Datenspeicher einzugeben, worauf der Rechner nicht nur den Bewegungsweg für diese eine oder diese einige wenigen Schuhgrößen, sondern auch für alle anderen vorkommenden Schuhgrößen des betreffenden Schuhtyps errechnet. Mechanische Einstellungen an der Schuhzwickmaschine in Anpassung an unterschiedliche Schuhgrößen sind nicht mehr erforderlich. Das erfindungsgemäße Verfahren kann insbesondere dort Anwendung finden, wo an der Spitze des Schuhes der Klebstoff durch einen an die Form der Brandsohle in deren Spitzenbereich angepaßten Stempel, in dem in Richtung der Ferse anschließenden Seitenbereich bis über die Ballenpartie jedoch mittels steuerbar bewegbarer Auftragedüsen aufgetragen wird. Dabei soll der Bewegungsweg der Auftragedüsen für alle Schuhtypen und alle Schuhgrößen möglichst genau dem Randverlauf der Brandsohle folgen.

Als Grundlage für die Festlegung des Bewegungsweges der Auftragedüsen nach der Erfindung dient nur eine oder dienen nur einige wenige Mustersohlen vorgegebener Größe, anhand welcher die Koordinaten der ausgewählten Punkte ausgemessen werden, denen die Auftragedüse auf ihrem Bewegungsweg folgen soll. Als Weiteres wird die Auftragelänge für den Klebstoff in den Datenspeicher eingegeben. Die Länge des Teils des Schuhs und damit der Brandsohle und des Leistens, das spitzengezwickt wird, also etwa der Bereich bis über den Ballen, hat ein bestimmtes Verhältnis zur Gesamtlänge des Leistens. Auf diese Weise läßt sich die Länge des Klebstoffauftrages, d.h. die Länge des Bewegungsweges, auf welchem ein Klebstoffauftrag auf die Bandsohle erfolgen soll, rechnerisch für die verschiedenen Leistengrößen ermitteln, wenn beim Zwicken auch die Leistengröße in den Datenspeicher eingegeben wird.

Vorzugsweise erfolgt zunächst der Klebstoffauftrag mittels der Auftragedüsen und zwar in Richtung von dem Spitzenende zum Fersenende der Bandsohle, und dann der Klebstoffauftrag mittels des Stempels im Spitzenbereich. Die Programmsteuerung der Auftragedüsen kann dabei so erfolgen, daß der Bewegungweg der Auftragedüsen schon innerhalb des Bereichs des Auftragestempels beginnt, damit im Klebstoffauftrag keine Lücke entsteht. Da der Stempel erst nachkommt, wenn die Auftragedüsen schon weggefahren sind, ist eine solche Überdeckung möglich. Nach dem Ende des Klebstoffauftrages fahren die Auftragedüsen ggf. noch auf ihrem Weg in Richtung Ferse zu Ende, schwenken dann nach innen in Richtung Leistenmitte und gehen anschließend von der Brandsohle weg. Das Wegfahren der Auftragedüsen von der Brandsohle kann verzögert werden, bis der Einzwickvorgang beendet ist. Dadurch wird die Brandsohle bis zur Beendigung des Zwickvorganges gegen den Leistenboden gedrückt und abgestützt, was insbesondere dann von Interesse ist, wenn der Leistenboden und damit die Brandsohle beim Zwicken nach unten gekehrt ist.

Die Genauigkeit der Ermittlung des Bewegungsweges für unterschiedliche Schuhgrößen aufgrund der eingegebenen Koordinatendaten mit Hilfe des Rechnerprogramms kann dadurch bei einer besonderen Ausgestaltung der Erfindung erhöht werden, daß als Grundlage für die Eingabe der Koordinatendaten eine kleine und eine große, vorzugsweise die kleinste und die größte Mustersohle verwendet werden, welche für einen bestimmten Schuhtyp in Frage kommen.

Eine weitere Verbesserung kann dadurch erzielt werden, wenn bspw. mittels des Rechnerprogramms die eingebenen Koordinatendaten der Punkte des dem linken und/oder dem rechten Leistenrand zugeordneten Bewegungsweges in ihrem Abstand von der Mittellinie entweder gemeinsam oder je für sich veränderbar sind. Hierdurch kann mittels einer entsprechenden Eingabe eine Anpassung des Klebstoffauftrages an unterschiedliche Schuhbreiten bzw. des Abstandes des Klebstoffauftrages von der Brandsohlenkante an unterschiedliche Breiten des Zwickrandeinschlages des Schuhschaftmaterials erfolgen.

Es kann ferner vorgesehen sein, daß bspw. mittels des Rechnerprogramms die Koordinatendaten der Punkte des gesamten aus den Bewegungswegen der Auftragedüsen od. dgl. Werkzeug zusammengesetzten Klebstoffauftragebildes od. dgl. Werkzeugbewegungsbildes in der Weise veränderbar sind, daß das gesamte Klebstoffauftragebild od. dgl. Werkzeugbewegungsbild um einen Winkel relativ zu der Leistenspitze verschwenkt wird. Hierdurch kann dem Umstand Rechnung getragen werden, daß die Mittellinie des eingespannten Leistens unter Umständen nicht genau mit der Mitteilinie der Einspannvorrichtung oder der Einscherwerkzeuge der Schuhzwickmaschine übereinstimmt. Es ist dann zweckmäßig, daß ein Verschwenken des Klebstoffauftragebildes um die Winkeldifferenz erfolgt.

Bei einer weiteren Ausgestaltung der Erfindung ist bspw. mittels des Rechnerprogramms der Klebstoffauftrag od. dgl. Wirkung des Werkzeuges auf seinem Bewegungsweg streckenweise ausblendbar. Beim Zwicken von Sandalen oder ähnlichem Schuhwerk kann es nämlich nötig sein, den Klebstoffauftrag dort auszublenden, wo kein Oberleder auf die Brandsohle aufgeklebt wird. Eine solche Ausblendung kann nach der Erfindung einfach mittels des Rechnerprogrammes erfolgen.

Ferner kann es zweckmäßig sein, wenn bspw. mittels des Rechnerprogramms die Länge des Klebstoffauftrages bzw. des Einwirkungswegs des Werkzeugs für die rechte (äußere) und linke (innere) Leistenseite unterschiedlich einstellbar ist, um eine Anpassung bei verschiedenen Schuhformen vornehmen zu können.

Ein gesondertes Eingeben von Koordinatendaten für rechte und linke Schuhe erübrigt sich dann, wenn gemäß einer weiteren Ausgestaltung der Erfindung bspw. mittels des Rechnerprogramms die Koordinaten der Punkte des gesamten aus den Bewegungswegen der Auftragedüse od. dgl. Werkzeug zusammengesetzten Klebstoffauftragebildes od. dgl. Werkzeugbewegungsbildes in der Weise veränderbar sind, daß das gesamte Klebstoffauftragebild od. dgl. Werkzeugbewegungsbild bezüglich der Längsmittellinie des Leistenbodens gespiegelt wird. Es genügt dann die Aufnahme der Punktkoordinaten anhand einer rechten oder linken Mustersohle.

Der in den Datenspeicher einzugebende und/oder dem Rechner beim Zwicken einer Schuheinheit vorgegebener Schuhgröße zur Berechnung des Bewegungsweges der Auftragedüse od. dgl. Werkzeug zur Verfügung zu stellende Wert der Gesamtlänge des Leistens wird vorzugsweise mittels eines Gebers anhand der an den eingespannten Leisten herangefahrenen Stellung der Fersenstütze der Schuhzwickmaschine ermittelt. Auf diese Weise wird selbsttätig jeweils der für die betreffende Schuhgröße passende Klebstoffauftrag bewirkt.

Die in den Datenspeicher einzugebenden Koordinatendaten können auf einfache Weise unter Vermeidung eines besonderen Strichrasters dadurch ermittelt werden, daß man eine Längsmittellinie von der Spitze bis zur Fersenmitte auf der Mustersohle auf-zeichnet, dann mehrere Querlinien, welche vorzugsweise senkrecht zur Längsmittellinie verlaufen, in dem für den Klebstoffauftrag mittels der Auftragedüsen bzw. der Bearbeitung mittels sonstiger Werkzeuge bestimmten Leistenlängsbereiches in vorgegebenen Abständen voneinander auf der Mustersohle aufzeichnet, und dann die Längskoordinaten der Schnittpunkte zwischen Längsmittellinie und Querlinien als Abstand von der Sohlenspitze sowie der zugeordneten Querkoordinaten der von der Auftragedüse od. dgl. Werkzeug zu durchlaufenden Punkte auf den Querlinien als Abstand von der Längsmittellinie ausmißt. Diese Koordinatendaten werden dann in den Datenspeicher eingegeben.

Das erfindungsgemäße Verfahren kann vorzugsweise mittels eines Personal-Computers (PC) ausgeführt werden. Dabei erfolgt die Eingabe der Koordinaten und ggf. der sonstigen dem Rechner zur Verfügung zu stellenden Angaben sowie deren Änderung, Anpassung und Korrektur vorzugsweise mittels eines Bildschirms, was durch eine Bedienerführung noch erleichtert werden kann.

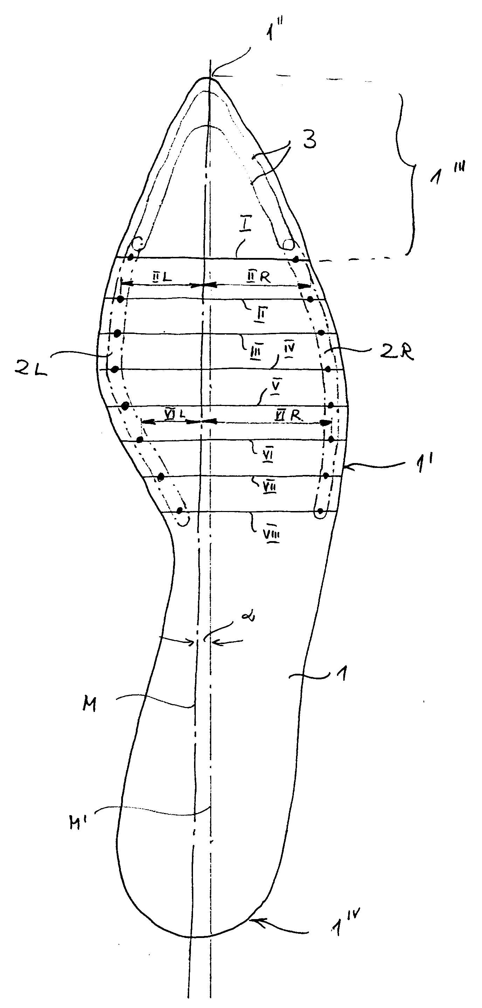

Ein Ausführungsbeispiel der Erfindung wird nachfolgend anhand der Zeichnung näher erläutert.

Als Grundlage für die Erstellung der Bewegungswege zweier Klebstoffauftragedüsen und damit der Klebstoffauftragelinien 2L und 2R längs der Brandsohlenkante 1' einer Brandsohle 1 dient z.B. eine zum Leisten passende Musterbrandsohle oder dienen einige wenige, z.B. zwei derartige Musterbrandsohlen 1, wobei man zweckmäßigerweis eine kleine und eine große, vorzugsweise die kleinste und die größte bei dem betreffenden Schuhtyp vorkommende Musterbrandsohle auswählt. Auf der jeweiligen Musterbrandsohle 1 wird zunächst eine Mittellinie M von der Spitze bis zur Mitte der Ferse $1^{IV}$ aufgezeichnet und die Länge des Spitzenbereichs $1'''$, in welchem von einem Klebstoffauftragestempels eine an die Spitzenform angepaßte Klebstoffauftragelinie 3 abgelegt wird, mittels einer senkrecht zur Längsmittellinie M gezogenen ersten Querlinie I markiert. Ab der Querlinie I soll, links und rechts, in Richtung des Fersenendes $1^{IV}$ Klebstoff in Form der Klebstoffauftragelinien 2L und 2R mittels über Stellmotoren gesteuerter Auftragedüsen, welche dem Brandsohlenrand 1' möglichst genau folgen, aufgetragen werden. Im Abstand von der ersten Querlinie I und im Abstand voneinander werden weitere Querlinien II bis VIII auf die Musterbrandsohle aufgezeichnet, und zwar in demjenigen Längenbereich, in welchem der Klebstoffauftrag erfolgen soll. Je nach der gewünschten Genauigkeit können die Abstände etwa zwischen 5 und 10 mm liegen. Auf den Querlinien I bis VIII werden dann diejenigen Koordinaten der nahe der Brandsohlenkante 1' liegenden Punkte ausgemessen, durch welche die Auftragedüsen bei ihrer Bewegung laufen sollen. Als Koordinaten kann jeweils der Abstand der betreffenden Querlinie von der Brandsohlenspitze $1''$ und der Abstand des betreffenden Punktes auf der betreffenden Querlinie von der Längsmittellinie M dienen. Eingezeichnet sind bspw. bei den Querlinien II und VI die rechten bzw. linken Abstände IIL, VIL und IIR, VIR. Diese Koordinatenwerte werden dann in einen Datenspeicher eingegeben. Falls die Querlinien einen bekannten vorgegebenen Abstand voneinander haben, kann statt der Längenkoordinaten auch die Anzahl der ermittelten Querlinien, ausgehend von der den Stempelbereich $1^{III}$ abgrenzenden Querlinie I, eingegeben werden, da diese dann ein Längenkoordinatenmaß gibt. Ferner kann in den Datenspeicher auch die für die Musterbrandsohle gewünschte Länge des Klebstoffauftrags, bspw. in Millimetern, eingegeben werden. Da die Länge des Teils des Schuhs, das spitzengezwickt wird, also etwa der Bereich bis über den Ballen, ein bestimmtes Verhältnis zur Gesamtlänge des Leistens hat, läßt sich die jeweilige Länge des Klebstoffauftrages und die entsprechende Form der Klebstoffauftragelinie für verschiedene Leistengrößen errechnen, wozu das erfindungsgemäße Rechnerprogramm dient.

Zum Zwicken einer bestimmten Schuheinheit wird der Leisten mit der darauf aufgezogenen Schuheinheit in die Schuhzwickmaschine eingesetzt. Kurz vor dem Einzwickvorgang legt sich eine Fersenstütze an die Ferse des Leistens an. Dort ist ein Geber angeordnet, welcher entsprechend der Längsposition der Fersenstütze ein Signal an den Rechner abgibt, welcher aus der somit gemessenen Leistenlänge selbsttätig den Auftragebereich und die Auftrageform, d.h. den Abstand der Klebstoffauftragelinie von der Längsmittellinie des Leistens berechnet und danach die Stellmotoren für die Auftragedüsen programmgesteuert führt.

Wie zeichnerisch dargestellt, kann der Bewegungsweg der Auftragedüsen schon innerhalb des Bereichs des Auftragestempels beginnen, damit im Klebstoffauftrag keine Lücke entsteht. Der Klebstoffauftrag mittels des Auftragestempels im Spitzenbereich $1'''$ efolgt erst, wenn die Auftragedüsen weggefahren sind.

Aus der zeichnerischen Darstellung ist ersichtlich, daß die Längsmittellinie M des eingespannten Leistens von der Mittellinie M' der Einspannvorrichtung oder der Einscherwerkzeugeder Schuhzwickmaschine um einen Winkel α abweicht. Mit Hilfe des Rechnerprogramms kann das Klebstoffauftragebild bezüglich der Brandsohlenspitze $1''$ um diesen Schwenkwinkel korrigiert werden.

In der zeichnerischen Darstellung sind die Klebstoffauftragelinien 2L und 2R in dem sich an den Spitzenbereich $1'''$ anschließenden Ballenbereich kontinuierlich durchgezogen. Im Falle des Zwickens von Sandalen und ähnlichem Schuhwerk kann es erforderlich sein, den Klebstoffauftrag dort auszublenden, wo kein Oberleder aufgeklebt (aufgezwickt) werden soll. Eine solche Klebstoffauftrageausblendung kann von dem Rechnerprogramm nach Eingabe entsprechender Daten berücksichtigt werden.

Die zeichnerische Darstellung veranschaulicht, daß die linke Klebstoffauftragelinie 2L und die rechte Klebstoffauftragelinie 2R etwa gleiche Länge haben. Dies muß für bestimmte Schuhtypen nicht so sein. In diesem Fall werden für den Klebstoffauftrag am linken und am rechten Seitenrand der Brandsohle 1 nach Eingabe entsprechender Daten von dem Rechnerprogramm unterschiedliche Längen berücksichtigt.

Bei Abweichung der Schuheinheiten in der Breite oder bei Anpassung der Lage der Klebstoffauftragelinien relativ zu der Brandsohlenkante 1' können die dem Rechner zur Verfügung gestellten Querkoordinatendaten verändert, angepaßt bzw. korrigiert werden.

Bezugszeichenliste:

| 1 | Brandsohle |
|---|---|
| 1' | Brandsohlenkante |
| 1'' | Brandsohlenspitze |
| 1''' | Spitzenbereich des Klebstoffauftragestempels |
| $1^{IV}$ | Fersenende der Brandsohle |
| 2L | Klebstoffauftragelinie der Auftragedüse links |
| 2R | Klebstoffauftragelinie der Auftragedüse rechts |
| 3 | Klebstoffauftragelinie des Stempels |
| I-VIII | Querlinien auf der Brandsohle |
| IIL, IIR | Abstand des Klebstoffauftrages auf der Querlinie II von der Längsmittellinie M, links und rechts |
| VIL, VIR | Abstand des Klebstoffauftrages auf der Querlinie VI von der Längsmittellinie M, links und rechts |
| M | Längsmittellinie der Brandsohle bzw. des Leistens |
| M' | maschinenbedingte Längsmittellinie |
| $\alpha$ | Korrekturwinkel |

**Patentansprüche**

1. Verfahren zum Festlegen des Bewegungsweges der wenigstens einen Auftragsdüse od. dgl. Werkzeug einer Klebstoffauftragevorrichtung od. dgl. Werkzeugbetätigungsvorrichtung an einer Schuhzwickmaschine, welche wenigstens in Längs- und in Querrichtung des eine Schuheinheit mit Bandsohle aufnehmenden, in die Schuhzwickmaschine eingespannten Leistens nahe dem die Brandsohle tragenden Leistenboden von einer einen Datenspeicher und einen Rechner aufweisenden Gebereinrichtung mit Hilfe einer Programmsteuerung über einen Stellmotor, vorzugsweise numerisch, steuerbar bewegbar ist, wobei mit Hilfe einer Mustersohle, z.B. einer Musterbrandsohle vorgegebener Länge und Außenkontur und eines Linearrasters die Koordinaten einer Anzahl ausgewählter Punkte des gewünschten Bewegungsweges des Werkzeuges bestimmt und in dem Datenspeicher, vorzugsweise digital eingegeben werden, und wobei der Rechner das Steuerprogramm für die Bewegung des Werkzeugs aus dem in den Datenspeicher eingegebenen Koordinatendaten errechnet, dadurch gekennzeichnet, daß mittels eines Rechnerprogramms aus den in den Datenspeicher anhand nur einer oder einiger weniger ausgewählter Mustersohle(n) vorgegebener Größe eingegebenen Koordinatendaten, der eingegebenen Bewegungsstrecke der Auftragsdüse od. dgl. Werkzeug in Längsrichtung des zu der Mustersohle passenden Leistens, und ggf. der zugehörigen Gesamtlänge des Leistens die Bewegungswege der Auftragsdüse od. dgl. Werkzeug für die verschiedensten Leistengrößen ermittelt werden.

2. Verfahren nach Anspruch 1, dadurch gekennzeichnet, daß als Grundlage für die Eingabe der Koordinatendaten eine kleine und eine große, vorzugsweise die kleinste und die größte Mustersohle verwendet werden.

3. Verfahren nach Anspruch 1 oder 2, dadurch gekennzeichnet, daß die Koordinaten der Punkte des dem linken und/oder dem rechten Leistenrand zugeordneten Bewegungswegs in ihrem Abstand von der Mittellinie entweder gemeinsam oder je für sich veränderbar sind.

4. Verfahren nach einem der Ansprüche 1 bis 3, dadurch gekennzeichnet, daß die Koordinatendaten der Punkte des gesamten aus den Bewegungswegen der Auftragsdüse od. dgl. Werkzeug zusammengesetzten Klebstoffauftragebildes od. dgl. Werkzeugbewegungsbildes in der Weise veränderbar sind, daß das gesamte Klebstoffauftragebild od. dgl. Werkzeugbewegungsbild um einen Winkel ( $\alpha$ ) relativ zu der Leistenspitze verschwenkt wird.

5. Verfahren nach einem der Ansprüche 1 bis 4, dadurch gekennzeichnet, daß der Klebstoffauftrag od. dgl Wirkung des Werkzeugs auf seinem Bewegungsweg streckenweise ausblendbar ist.

6. Verfahren nach einem der Ansprüche 1 bis 5, dadurch gekennzeichnet, daß die Länge des Klebstoffauftrages bzw. des Einwirkungsweges des Werkzeuges für die rechte (äußere) und linke (innere) Leistenseite unterschiedlich einstellbar ist.

**7.** Verfahren nach einem der Ansprüche 1 bis 6,
dadurch gekennzeichnet, daß die Koordinaten
der Punkte des gesamten aus den Bewegungwegen der Auftragsdüse od. dgl. Werkzeug
zusammengesetzten Klebstoffauftragebildes
od. dgl. Werkzeugbewegungsbildes in der
Weise veränderbar sind, daß das gesamte
Klebstoffauftragebild od. dgl. Werkzeugbewegungsbild bezüglich der Längsmittellinie des
Leistenbodens gespiegelt wird.

**8.** Verfahren nach einem der Ansprüche 1 bis 7,
dadurch gekennzeichnet, daß der in den Datenspeicher einzugebende und/oder dem
Rechner beim Zwecken einer Schuheinheit
vorgegebener Schuhgröße zur Berechnung
des Bewegungsweges der Auftragedüse oder
dgl. Werkzeug zur Verfügung zu stellende
Wert der Gesamtlänge des Leistens mittels
eines Gebers anhand der an den eingespannten Leisten herangefahrenen Stellung der Fersenstütze der Schuhzwickmaschine ermittelt
wird.

**9.** Verfahren nach einem der Ansprüche 1 bis 8,
dadurch gekennzeichnet, daß die in den Datenspeicher einzugebenden Koordinaten wie folgt
ermittelt werden:

Aufzeichnen einer Längsmittellinie von der
Spitze bis zu der Fersenmitte auf der Mustersohle,

Aufzeichnen von mehreren Querlinien in dem
für den Klebstoffauftrag mittels der Auftragsdüse bzw. der Bearbeitung mittels des sonstigen
Werkzeugs bestimmten Leistenlängenbereich
in vorgegebenen Abständen voneinander auf
der Mustersohle, und

Ausmessen der Längskoordinaten der Schnittpunkte zwischen Längsmittellinie und Querlinien als Abstand von der Sohlenspitze sowie
der zugeordneten Querkoordinaten der von der
Auftragedüse od. dgl. Werkzeug zu durchlaufenden Punkte auf den Querlinien als Abstand
von der Längsmittellinie.

**10.** Verfahren nach einem der Ansprüche 1 bis 9,
dadurch gekennzeichnet, daß für seine Ausführung ein PC verwendet wird.

**11.** Verfahren nach Anspruch 10, dadurch gekennzeichnet, daß die Eingabe der Koordinaten und
ggf. der sonstigen dem Rechner zur Verfügung zu stellenden Angaben mittels Bildschirm erfolgt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X<br><br>Y | EP-A-0 041 808 (THE BRITISH UNITED SHOE MACHINERY COMPANY LTD)<br><br>* Seite 5, Zeile 31 - Seite 7, Zeile 4 *<br>--- | 1-8,10, 11<br><br>9 | A43D119/00<br>G05B19/42<br>A43D25/18 |
| D,Y | EP-A-0 084 949 (USM CORPORATION)<br>* Anspruch 10 *<br>--- | 9 | |
| X | EP-A-0 340 417 (KLÖCKNER FERROMATIK DESMA GMBH)<br><br>* Ansprüche 1,3 *<br>--- | 1-8,10, 11 | |
| X | EP-A-0 213 909 (USM CORPORATION)<br><br>* Seite 3, Zeile 3 - Seite 5, Zeile 12; Anspruch 2 *<br><br>----- | 1-8,10, 11 | |
| | | | **RECHERCHIERTE SACHGEBIETE (Int. Cl.5 )**<br><br>A43D<br>G05B |

Der vorliegende Recherchenbericht wurde für alle Patentansprüche erstellt

| Recherchenort | Abschlußdatum der Recherche | Prüfer |
|---|---|---|
| DEN HAAG | 13 NOVEMBER 1991 | SUENDERMANN R.O. |

EPO FORM 1503 03.82 (P0403)